## Europäisches Patentamt
## European Patent Office
## Office européen des brevets

(19)

(11) Veröffentlichungsnummer: **0 232 756**
**B1**

(12) # EUROPÄISCHE PATENTSCHRIFT

(45) Veröffentlichungstag der Patentschrift:
04.01.89

(51) Int. Cl.⁴: **B 65 D 59/02,** F 16 L 55/10

(21) Anmeldenummer: **87100774.6**

(22) Anmeldetag: **21.01.87**

(54) **Topfförmiger Verschlussstopfen aus Kunststoff für Rohre.**

(30) Priorität: **24.01.86 DE 8601716 U**

(43) Veröffentlichungstag der Anmeldung:
**19.08.87 Patentblatt 87/34**

(45) Bekanntmachung des Hinweises auf die Patenterteilung:
**04.01.89 Patentblatt 89/1**

(84) Benannte Vertragsstaaten:
**AT BE CH DE FR LI LU NL SE**

(56) Entgegenhaltungen:
**DE-A-2 827 225**
**DE-U-8 405 215**
**GB-A-2 141 509**
**US-A-3 807 457**
**US-A-4 079 756**
**US-A-4 210 179**
**US-A-4 393 900**

(73) Patentinhaber: **REHAU AG + Co, Rheniumhaus,
D-8673 Rehau (DE)**

(72) Erfinder: **Der Erfinder hat auf seine Nennung
verzichtet**

EP 0 232 756 B1

## Beschreibung

Die Neuerung betrifft einen topfförmigen Verschlußstopfen aus Kunststoff für Rohre, vorzugsweise Kunststoff-Rohre, wobei der Verschlußstopfen als Blas-, Spritzguß- oder Tiefziehteil ausgebildet ist und aus einem Bodenteil mit einer umlaufenden, vom Bodenteil aufragenden Topfwand besteht, mit welcher der Verschlußstopfen in das Lumen des Rohres einsetzbar ist.

Aus dem Deutschen Gebrauchsmuster 84 05 215.5 ist ein topfförmiger Verschlußstopfen bekannt, welcher für alle Druckstufen eines Rohrdurchmessers für alle Rohrmaterialien, Betriebsdrücke und Rohrenden verwendbar ist. Bei dem bekannten Verschlußstopfen ist die Topfwand am bodenseitigen Ende derart nach innen gestülpt, daß sich unter Bildung eines zum Stopfeninneren offenen, umlaufenden Randes über eine vorgegebene Tiefe eine zur Topfwand parallel verlaufende Innenwand ergibt, welche an ihrem oberen Rand über einen den Abstand bestimmenden Steg mit der Topfwand einstückig verbunden ist und an ihrem freien Ende des Bodenteil trägt. Die Topfwand weist - auf den Umfang verteilt - in ihrer Oberfläche axial gerichtete, gesickte Bereiche auf, welche nach außen konkav und nach innen konvex ausgebildet sind.

Da sich bei den einzelnen Druckstufen eines Rohrdurchmessers lediglich die Wanddicke ändert, während der Aussendurchmesser der Rohre immer der gleiche bleibt, kann die sich ändernde Wanddicke bzw. auch fertigungstechnisch bedingte Toleranz durch die am Umfang verteilten gesickten Bereiche der Oberfläche des Verschlußstopfens aufgefangen werden.

Die Neuerung baut auf diesem bekannten Verschlußstopfen auf und hat sich die Aufgabe gestellt, die beim Rohrinnendurchmesser auftretenden Toleranzen noch besser auffangen zu können. Neuerungsgemäß wird dazu vorgeschlagen, daß in die Topfwand in axialer Richtung durchlaufende, vom Bodenteil zum Bördelrand ins Topfinnere gerichtete, nutenförmige Vertiefungen eingelassen sind, welche im Bodenbereich nach außen annähernd planeben mit dem Bodenteil abschließen, mit zunehmender Höhe der Topfwand an Tiefe zunehmen und mit ihren Seitenwandungen über den Bördelrand hinausragen.

Hierbei hat sich als vorteilhaft herausgestellt, daß die Topfwand über ihre Höhe in stufenförmige, umlaufende Ringabschnitte unterteilt ist, welche am Bodenteil den geringsten und am Bördelrand den größten Durchmesser aufweisen, und daß die nutenförmigen Vertiefungen die Topfwand entsprechend der Durchmessererweiterung der Ringabschnitte mit abschnittsweise zunehmender Nutentiefe derart durchdringen, daß in jeder Abstufung annähernd die gleiche Nutentiefe vorhanden ist. Weiterhin ist es zweckmäßig, daß die über den Bördelrand hinausgezogenen Seitenwandungen der nutenförmigen Vertiefungen durch eine Stirnwand einstückig miteinander verbunden sind.

Die Neuerung besteht darin, daß wenigstens eine nutenförmige Vertiefung vom Bodenteil über den Bördelrand hinaus in die Topfwand eingebracht wird. Bei der Überbrückung von großen Toleranzen mit einer einzigen Nut würde dabei zwangsläufig eine verhältnismäßig tiefe und breite Nut erforderlich werden, so daß eine Möglichkeit der Verschmutzung der Muffeninnenseite, die durch den Verschlußstopfen gerade vermieden werden soll, gegeben wäre. Es wird daher von der Neuerung als optimal angesehen, mehrere solcher Nuten, welche vom Bodenteil über den Bördelrand des Verschlußstopfens hinausreichen, in die Topfwand einzubringen. Dadurch wird der Umfang des Verschlußstopfens in Einzelsegmente unterteilt, zwischen denen sich die nutenförmigen Vertiefungen befinden, welche gewissermaßen Spalten in der Topfwand bilden. Diese Spalten können sich beim Zusammenpressen des Verschlußstopfens was sich beispielsweise bei der Überwindung von Toleranzen beim Einsetzen des Verschlußstopfens in ein Rohrlumen ergeben kann, teilweise oder ganz schließen, wodurch diese Toleranzen in dem Verschlußstopfen aufgefangen werden. Berechnungen haben hierbei ergeben, daß die lichte Nutbreite optimal ca 2 mm betragen soll. So sind z. B. bei Verschlußstopfen für Rohre der Abmessungen DM 50 bis DM 100 jeweils drei am Umfang verteilte Nutenöffnungen als optimal errechnet worden. Bei Rohren der MW 125 bis 200 sind jeweils vier Nutenöffnungen und bei Rohren der MW 250 bis 300 sind jeweils fünf Nutenöffnungen als optimal zu bezeichnen.

Neben der Anzahl der nutenförmigen Vertiefungen und deren Breite ist auch noch die Nutentiefe von wesentlicher Bedeutung. Über diese Nutentiefe läßt sich nämlich die Kraft für das Zusammenpressen des Verschlußstopfens beim Einsetzen in das Rohrlumen beeinflussen. Große Nutentiefe ergibt hierbei geringere Einschnürkräfte, geringe Nutentiefe ergibt hohe Einschnürkräfte. Bei den durchgeführten Versuchen wurde hier als günstigster Wert die maximale Tiefe von drei- bis viermal der Nutbreite ermittelt.

In der Zeichnung ist ein Ausführungsbeispiel eines neuerungsgemäßen Verschlußstopfens schematisch dargestellt; es zeigt:

Fig. 1     den Verschlußstopfen in der Draufsicht von unten.

Fig. 2     den Verschlußstopfen im Teilschnitt in Seitenansicht.

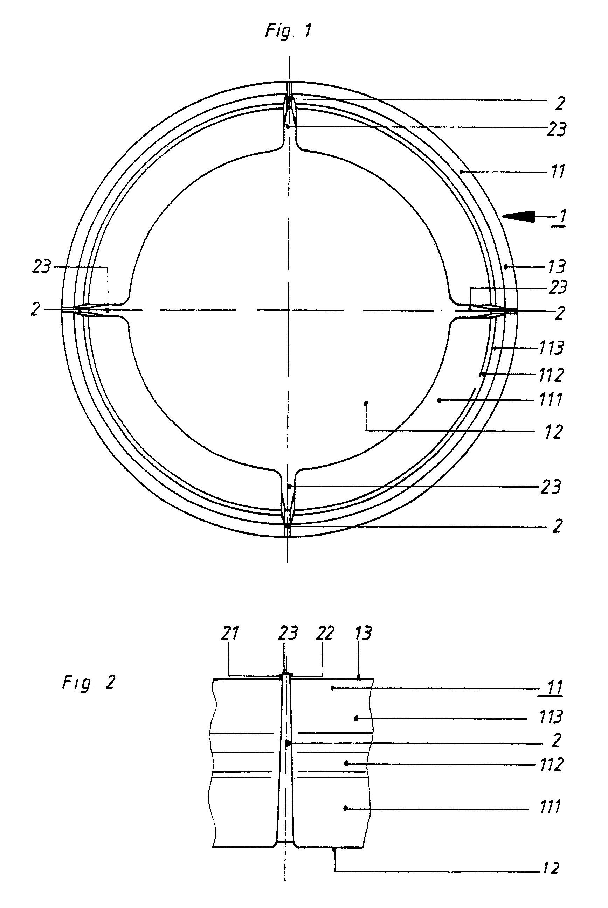

Die in Fig. 1 gewählte Draufsicht des Verschlußstopfens 1 von unten zeigt das Bodenteil 12 und von diesem aufragend die Topfwand 11, welche im Bördelrand 13 endet. Die Topfwand 11 besitzt umlaufende Ringabschnitte 111, 112, 113, welche unterschiedliche Durchmesser entsprechend der vom Bodenteil 12 zum Bördelrand 13 verlaufenden Durchmessererweiterungen aufweisen. Die Zeichnung zeigt einen Verschlußstopfen wie er bei Rohren der MW 150, d. h. mit vier nutenförmigen Vertiefungen 2 verwendet wird.

Aus Fig. 2 ergibt sich, daß die Stirnwand 23 der nutenförmigen Vertiefung 2 die Verbindung zwischen den über den Bördelrand 13 hinausgezogenen Seitenwandungen 21, 22 der nutenförmigen Vertiefung 2 darstellt. In Fig. 2 sind übrigens die der Durchmessererweiterung vom Bodenteil 12 zum Bördelrand 13 entsprechenden Ringabschnitte 111, 112, 113 in Draufsicht zu erkennen. Die nutenförmige Vertiefung 2 durchdringt diese Ringabschnitte 111, 112, 113 gradlinig vom Bodenteil 12 bis zum Bördelrand 13, den sie mit den Seitenwandungen 21, 22 und deren Abschluß - Stirnwand 23 überragt. Die Topfwand 11 kann auch durchgehend konisch vom Bodenteil 12 zum Bördelrand 13 verlaufen.

Aus beiden Darstellungen ergibt sich, daß bei radialen Druck auf den Verschlußstopfen, der während des Einsetzens in das Lumen eines Kunststoff-Rohres der MW 150 durch überwindung von Maßtoleranzen auftreten kann, durch die nutenförmigen Vertiefungen bis zur Anlage der Seitenwandungen 21, 22, aneinander zusammenpressen lassen. Auf diese Weise können große Toleranzen ohne größeren Kraftaufwand beim Verschließen von Spitzenden oder Muffen bei Kunststoff-Rohren überwunden werden.

Der Verschlußstopfen der Neuerung kann als Blasteil bzw. als Spritzguß- oder Tiefziehteil ausgebildet sein.

**Patentansprüche**

1. Töpfförmiger Verschlußstopfen aus Kunststoff für Rohre, vorzugsweise Kunststoff-Rohre, wobei der Verschlußstopfen als Blas-, Spritzguß- oder Tiefziehteil ausgebildet ist und aus einem Bodenteil mit einer umlaufenden, vom Bodenteil aufragenden Topfwand besteht, mit der der Verschlußstopfen in das Lumen des Rohres einsetzbar ist, dadurch gekennzeichnet, daß in die Topfwand (11) in axialer Richtung durchlaufende, vom Bodenteil (12) zum Bördelrand (13) ins Topfinnere gerichtete, nutenförmige Vertiefungen (2) eingelassen sind, welche im Bodenbereich nach außen annähernd planeben mit dem Bodenteil (12) abschließen, mit zunehmender Höhe der Topfwand (11) an Tiefe zunehmen und mit ihren Seitenwandungen (21, 22) über den Bördelrand (13) hinausragen.

2. Töpfförmiger Verschlußstopfen nach Anspruch 1, dadurch gekennzeichnet, daß die Topfwand (11) über ihre Höhe in stufenförmige, umlaufende Ringabschnitte (111, 112, 113) unterteilt ist, welche am Bodenteil (12) den geringsten und am Bördelrand (13) den größten Durchmesser aufweisen, und daß die nutenförmigen Vertiefungen (2) die Topfwand (11) entsprechend der Durchmessererweiterung der Ringabschnitte (111, 112, 113) mit abschnittsweise zunehmender Nutentiefe durchdringen.

3. Töpfförmiger Verschlußstopfen nach Ansprüchen 1 und 2, dadurch gekennzeichnet, daß die über den Bördelrand (13) hinausgezogenen Seitenwandungen (21, 22) der nutenförmigen Vertiefungen (2) durch eine Stirnwand (23) einstückig miteinander verbunden sind.

**Claims**

1. Cup-shaped plug of plastic for pipes, preferably plastic pipes, whereby the plug is a blow moulding, an injection moulding or a thermoformed part consisting of a base and a continuous cup wall rising from the base section with which the plug can be inserted into the opening of the pipe, characterized in that groove-shaped recesses (2) are let into the cup wall (11) which run in axial direction from the base section (12) to the edge of the cup flange (13) towards the inside of the cup. The grooves in the base area are almost flush with the base section (12) and, with increasing height of the cup wall (11), increase in depth. The side walls (21, 22) project above the cup flange (13).

2. Cup-shaped plug in accordance with claim 1, characterized in that the height of cup wall (1) is sub-divided into step-shaped annular sections (111, 112, 113) which have the smallest diameter at the level of the base section (12) and the largest diameter at the level of the cup flange (13), and in that the groove-shaped recesses (2) gradually penetrate further into the cup wall (11) with increasing groove depth corresponding to the increase in diameter of the annular section (111, 112, 113).

3. Cup-shaped plug in accordance with claim 1, characterized in that the side walls (21, 22) of the groove-shaped recesses (2) projecting above the cup flange (13) are connected by a one-piece end facing (23).

**Revendications**

1. Bouchon de fermeture en forme de pot, en plastique, pour tubes, de préférence en plastique, le bouchon de fermeture étant formé d'une pièce soufflée, injectée ou emboutie, et composé d'un fond avec une paroi circulaire s'élevant à partir du fond, avec laquelle le bouchon de fermeture peut être inséré dans l'ouverture du tube. Le système est caractérisé par le fait que des encoches en forme de rainures (2), centrées en continu allant du fond (12) au collet (13) et dirigées vers l'intérieur, sont encastrées dans la paroi du pot (11). Ces encoches forment vers l'extérieur une surface quasiment plane avec le fond (12); leur profondeur augmente au fur et à mesure que l'on monte sur la paroi du pot (11) pour ensuite dépasser le collet (13) avec leurs parois latérales (21, 22).

2. Bouchon de fermeture d'après les spécifications 1, caractérisé par le fait que la paroi du pot (11) est subdivisée sur sa hauteur en anneaux circulaires (111, 112, 113) en forme de paliers et qui dans la partie du fond (12) ont le diamètre le plus petit et au collet (13) le diamètre le plus grand. Les encoches en forme de rainures (2) pénètrent dans la paroi du pot (11) avec une profondeur de rainures qui croît palier par palier, en fonction de l'augmentation du diamètre des anneaux circulaires (111, 112, 113).

3. Bouchon de fermeture en forme de pot d'après les spécifications 1 et 2, caractérisé par le fait que les parois latérales (21, 22) des encoches en forme de rainures (2) depassant le collet (13) sont reliées d'un seul tenant par une paroi de bout (23).

Fig. 1

Fig. 2